# EUROPÄISCHE PATENTSCHRIFT

(11) **EP 3 740 641 B1**
(45) Veröffentlichungstag und Bekanntmachung des Hinweises auf die Patenterteilung: **04.05.2022**
(21) Anmeldenummer: 18822081.8
(22) Anmeldetag: 20.12.2018
(51) Int. Cl.: E06B 3/677, E06B 3/663

(54) **ISOLIERVERGLASUNG UND VERFAHREN ZU DEREN HERSTELLUNG**
INSULATING GLAZING AND METHOD FOR ITS MANUFACTURE
VITRAGE ISOLANT ET SON PROCÉDÉ DE FABRICATION

(30) Priorität: 16.01.2018 EP 18151865
(43) Veröffentlichungstag der Anmeldung: 25.11.2020
(73) Patentinhaber: SAINT-GOBAIN GLASS FRANCE, 92400 Courbevoie (FR)
(72) Erfinder: NÜSSER, Dirk, 52531 Übach-Palenberg (DE); CARRE, Florian, 52080 Aachen (DE); SCHREIBER, Walter, 52074 Aachen (DE)
(74) Vertreter: Gebauer, Dieter Edmund
(86) Internationale Anmeldenummer: PCT/EP2018/086191
(87) Internationale Veröffentlichungsnummer: WO 2019/141484

(56) Entgegenhaltungen:
- EP-A2- 2 006 481
- WO-A1-2014/095097
- AT-B- 327 423
- DE-A1- 3 842 129
- DE-A1- 19 506 119
- DE-U1-202005 022 110
- FR-A1- 2 552 153
- JP-A- H0 626 282

## Beschreibung

Die Erfindung betrifft eine Isolierverglasung, die eine erste Scheibe und eine zweite Scheibe, einen mit der ersten und zweiten Scheibe jeweils wasserdampfdicht fest verbundenen, umlaufenden Abstandshalter zwischen der ersten Scheibe und der zweiten Scheibe, der mindestens zwei parallel verlaufende Scheibenkontaktwände, eine Außenwand und eine Verglasungsinnenraumwand sowie einen Innenraum hat, und einen um die Außenwand des Abstandshalters zwischen der ersten und zweiten Scheibe umlaufenden wasserdichten Dichtmittelstreifen umfasst, wobei in den Dichtmittelstreifen und den Abstandshalter mindestens ein Druckausgleichselement eingesetzt ist. Sie betrifft des Weiteren ein Verfahren zur Herstellung einer solchen Isolierverglasung sowie deren Verwendung.

Isolierverglasungen sind seit Jahrzehnten ein unverzichtbares Bauelement von Wohn- und Zweckbauten in den Industrieländern, zumal in den gemäßigten und kälteren Klimazonen. Im Zuge der weltweiten Bemühungen zum Klimaschutz und zur Einsparung von Heiz- und Klimatisierungskosten werden sie immer bedeutsamer und zunehmend auch in weniger entwickelten Ländern eingesetzt.

Die Bauherren wählen die Isolierverglasung nicht nur nach deren Wärmedämmvermögen und den Kosten, sondern weitgehend auch nach der optischen Qualität aus. Sichtbare optische Mängel, wie sie etwa durch nicht völlig ebene Glasoberflächen bewirkt werden, werden von den Bauherren und ihren Architekten immer weniger hingenommen und dürfen bei marktgängigen Isolierverglasungen praktisch nicht auftreten.

Die Herstellung von Isolierverglasungen erfolgt in Massenproduktion in wenigen großen Werken der einzelnen Hersteller, und die fertigen Isolierverglasungen werden dann an viele Orte zur Weiterverarbeitung zu Bauteilen (Fenstern, Türen, etc.) oder zum unmittelbaren bauseitigen Einsatz (etwa für Fassaden- oder Dachverglasungen) geliefert. Diese können in erheblich abweichender Höhenlage vom Herstellungsort liegen, so dass bei einer hermetisch versiegelten Isolierverglasung in Folge des veränderten Drucks am Weiterverarbeitungs- oder Einsatzort eine Verbiegung der Scheiben auftreten und die optische Qualität der Isolierverglasung merklich beeinträchtigt werden kann. Die durch die Druckdifferenzen bewirkten Spannungen belasten auch den Randverbund der Isolierverglasung und führen tendenziell zu Zuverlässigkeitsproblemen.

Daher besteht ein Bedarf an einer Lösung, die einen Druckausgleich zwischen der Atmosphäre und dem Verglasungsinnenraum vor oder bei der Weiterverarbeitung oder dem bauseitigen Einsatz einer fertiggestellten Isolierverglasung ermöglicht.

Im Stand der Technik sind verschiedene Ausführungen von Isolierverglasungen bekannt, bei denen ein gewisser Gasaustausch zwischen dem Verglasungsinnenraum und der Umgebung ermöglicht wird.

EP 0 261 923 A2 offenbart eine Mehrscheiben-Isolierverglasung mit einem Abstandshalter aus einem feuchtigkeitsdurchlässigen Schaum mit einem integrierten Trockenmittel. Die Anordnung wird bevorzugt durch eine äußere Versiegelung und eine gas- und feuchtigkeitsdichte Folie abgedichtet. Die Folie kann metallbeschichtetes PET und Polyvinylidenchloridcopolymere enthalten.

DE 38 08 907 A1 offenbart eine Mehrfachglasscheibe mit einem durch den Randverbund laufenden Belüftungskanal und einer mit Trockenmittel gefüllten Trocknungskammer.

DE 10 2005 002 285 A1 offenbart ein Isolierglas-Druckausgleichsystem zum Einsatz im Scheibenzwischenraum von Wärmeisoliergläsern.

EP 2 006 481 A2 offenbart eine Vorrichtung zum Druckausgleich für Isolierglaseinheiten mit eingeschlossenem Gasvolumen, wobei in den Abstandshalter der Isolierverglasung ein Druckausgleichsventil eingebracht ist. Diese Druckausgleichsventile weisen jedoch eine komplizierte Mechanik in Form mehrerer beweglicher Teile auf, die nicht nur eine erhöhte Fehleranfälligkeit des Systems bedingen, sondern auch erheblich höhere Produktionskosten verursachen.

In der auf die Anmelderin zurückgehenden WO 2014/095097 A1 wird eine Isolierverglasung mit Druckausgleichselement und ein Verfahren zu deren Herstellung beschrieben. Hierbei ist ein Druckausgleichskörper, der eine gasdurchlässige und dampfdiffusionsdichte Membran enthält, in der Dichtmasse angeordnet und ragt in die Außenwand des Abstandhalters hinein, und der umlaufende Abstandshalter ist durch eine spezielle Schottwand unterteilt.

Aus der DE 195 06 119 A1 ist eine Isolierverglasung nach dem Oberbegriff des Anspruchs 1 bekannt, die speziell ein Druckausgleichselement enthält, welches aufgrund einer Messung des Drucks der umgebenden Atmosphäre eine zeitlich beschränkte Verbindung zwischen dem Innenraum der Isolierverglasung und der Atmosphäre bereitstellt. Auch aus der DE 38 42 129 A1 ist eine Druckausgleichsvorrichtung für Isolierglasscheiben bekannt, die auf die Druckdifferenz zwischen dem Scheibenzwischenraum und der Atmosphäre anspricht, wobei zeitweilig ein den Scheibenzwischenraum mit der Atmosphäre verbindendes Ventil geöffnet wird.

Der Erfindung liegt die Aufgabe zu Grunde, eine einfache und kostengünstige Lösung zum Druckausgleich von Isolierverglasungen nach deren Fertigstellung, vor oder bei der Weiterverarbeitung oder dem bauseitigen Einsatz, anzugeben.

Diese Aufgabe wird in ihrem Vorrichtungsaspekt durch eine Isolierverglasung mit den Merkmalen des Anspruchs 1 und in einem Verfahrensaspekt durch ein Herstellungsverfahren mit den Merkmalen des Anspruchs 13 gelöst. Zweckmäßige Fortbildungen des Erfindungsgedankens sind Gegenstand der jeweiligen abhängigen Ansprüche.

Die Erfindung schließt den Gedanken ein, im Randverbund der Isolierverglasung ein Druckausgleichselement vorzusehen, welches einerseits zur umgebenden Atmosphäre und andererseits zum Innenraum des Abstandshalters oder zum Verglasungsinnenraum zwischen der ersten und der zweiten Scheibe offen und so ausgebildet ist, dass es eine zeitlich beschränkte Gas-Verbindung mit Druckausgleichsfunktion zwischen der Atmosphäre und dem Innenraum des Abstandshalters oder dem Verglasungsinnenraum bereitstellt.

Ein weiterer Gedanke hierbei ist es, die zeitlich beschränkte Gas-Verbindung durch eine Substanz oder ein Wirkelement im Druckausgleichselement zu realisieren, welches aufgrund von Alterung und/oder Atmosphären-Einflüssen seine Gasdurchlässigkeit in einem geeigneten Zeitraum gravierend ändert. Zugleich muss von Anfang an sichergestellt sein, dass das Druckausgleichselement die Wasserdichtigkeit und weitgehende Dampfdiffusionsdichtigkeit des Randverbundes nicht gefährdet.

Unter einer zeitlich beschränkten Gas-Verbindung mit Druckausgleichsfunkton soll hier eine solche verstanden werden, die lediglich für eine vorbestimmte Zeit nach Fertigstellung der Isolierverglasung in erheblichem Umfang wirkt, also insbesondere für einen Zeitraum, der typischerweise von der Fertigstellung des "Scheibenpakets" bis zu dessen Einbau in ein Fenster oder eine Tür oder zu dessen Einsatz bei einer Fassadenverglasung verstreicht. Dies bedeutet nicht unbedingt, dass zu einem späteren Zeitpunkt überhaupt kein Gasaustausch und keinerlei Druckausgleich mehr stattfinden kann, sondern eher, dass dieser später wesentlich reduziert ist.

Speziell enthält das Druckausgleichselement in einem Grundkörper ein wasserdichtes Wirkelement aus einer anfänglich gasdurchlässigen Substanz, die altert und/oder unter dem Einfluss von Luftfeuchtigkeit in der Atmosphäre degeneriert und die Gasdurchlässigkeit des Druckausgleichselementes bis zu dessen völligem Verschluss zunehmend verringert. Die erwähnte Substanz kann in einer einfachen Ausgestaltung als Membran, insbesondere auf Poly(-1-trimethylsilyl-1-propyne) (PTSMP)-Basis, in den Grundkörper eingefügt sein.

In weiteren Ausgestaltungen kann einerseits die degenerierende Substanz zusammen mit, insbesondere auf der Außenseite, einer wasserdichten und gasdurchlässigen, jedoch den Durchtritt von Wasserdampf bremsenden Membran in das Druckausgleichselement gefüllt sein, wobei insbesondere die degenerierende Substanz ein Polyethylenglycol(PEG)-Pulver oder -Granulat und die wasserdichte Membran eine PTFE-Membran, insbesondere eine gereckte oder gesinterte PTFE-Membran (Goretex), aufweist. Neben den genannten kommen auch andere chemische Substanzen oder Mischungen in Betracht, die eine vergleichbare Funktion haben und deren Kosten vertretbar sind.

Eine weitere Ausgestaltung sieht vor, dass die degenerierende Substanz zusammen mit, insbesondere auf der Innenseite einer wasserdichten und gasdurchlässigen, jedoch den Durchtritt von Wasserdampf bremsenden Membran in das Druckausgleichselement eingesetzt ist. Auch hier weist insbesondere die wasserdichte Membran eine PTFE-Membran auf, und die degenerierende Substanz ist eine unter dem Einfluss von Luftfeuchtigkeit quellende Substanz, die als anfänglich poröser oder mit feinen Öffnungen versehener Einsatz vorliegt. Derartige quellfähige Substanzen sind in großer Vielzahl bekannt; zu ihnen zählen insbesondere gewisse thermoplastische Elastomere (TPE).

In weiteren, aus diesseitiger Sicht bevorzugten Ausführungen ist die Verglasungsrauminnenwand des Abstandshalters gasdurchlässig ausgeführt, und das Druckausgleichselement ragt in den Innenraum des Abstandshalters und verbindet diesen druckausgleichend mit der Atmosphäre.

Aus dem Innenraum des Abstandshalters heraus erfolgt dann eine Luft- bzw. Gasdiffusion in den Scheibenzwischenraum oder in die Atmosphäre, bis der erwünschte Druckausgleich erreicht ist.

Diese Ausführung ist insbesondere angezeigt, wenn der Innenraum des Abstandshalters mit einem Trockenmittel befüllt ist, denn dann passiert im Rahmen des Druckausgleiches eintretende Umgebungsluft das Trockenmittel, und ihm wird in wünschenswerter Weise die Luftfeuchtigkeit entzogen. Insbesondere kann hierbei die Verglasungsrauminnenwand des Abstandshalters eine Vielzahl kleiner Öffnungen aufweisen, die insbesondere über die gesamte Länge des Abstandshalters verteilt sind.

Grundsätzlich ist aber auch eine Ausführung möglich, bei der das Druckausgleichselement den Abstandshalter durchstößt und in den Verglasungsinnenraum ragt und diesen druckausgleichend mit der Atmosphäre verbindet. In diesem Fall kann ein Trockenmittel im Druckausgleichselement selbst vorgesehen sein, oder gegebenenfalls kann in bestimmten Einsatzfällen auf eine Trocknung der geringen Menge von eintretender Umgebungsluft verzichtet werden.

In einer zweckmäßigen konstruktiven Ausführung ist ein Grundkörperabschnitt des Druckausgleichselements in den Dichtmittelstreifen eingebettet und an dessen Außenseite offen, und er ist an der Außenwand des Abstandshalters fixiert, z. B. in diese eingeschraubt. Insbesondere ist hierbei der in den Dichtmittelstreifen eingebettete Grundkörperabschnitt im Dichtmittelstreifen von einer separaten wasserdichten Dichtung umgeben und an der Durchstoßöffnung in der Außenwand des Abstandshalters mit einer weiteren separaten, wasserdampfdichten Dichtung versehen.

In einer weiteren Ausgestaltung hat der Grundkörper des Druckausgleichselementes im Wesentlichen abgestufte zylindrische Form. Ein Abschnitt größeren Durchmessers, oben als der "Grundkörperabschnitt" bezeichnet, sitzt dann auf der Außenwand des Abstandshalters, und ein Abschnitt kleineren Durchmessers ragt durch die dort vorgesehene Öffnung in den Abstandshalter hinein oder durchstößt diesen an einer weiteren, mit der ersten ausgerichteten Öffnung in der Verglasungsrauminnenwand. Bei der zylindrischen Ausführung des Grundkörpers ist die separate wasserdichte Dichtung hohlzylinder- bzw. ringförmig und die weitere separate, wasserdampfdichte Dichtung ringförmig.

Verfahrensseitige Ausgestaltungen der Erfindung ergeben sich für den Fachmann ohne weiteres aus den oben erwähnten Vorrichtungsaspekten und werden insoweit hier nicht nochmals beschrieben.

Es wird jedoch darauf hingewiesen, dass gegebenenfalls das Druckausgleichselement vor dem Einsetzen in die Öffnung des Dichtmittelstreifens mit der separaten wasserdampfdichten Dichtung versehen wird. Weiterhin wird darauf hingewiesen, dass in einer weiteren Ausführung die Öffnung im Dichtmittelstreifen größer dimensioniert wird als die Außenabmessungen des Druckausgleichselementes und nach dem Einsetzen des Druckausgleichselementes der Spalt zwischen dessen Außenkontur und der Innenwandung der Öffnung durch Einspritzen einer Dichtmasse zur Bildung der separaten wasserdichten Dichtung ausgefüllt wird. Dies ermöglicht eine hermetisch dichte Einbettung des Druckausgleichselementes in den Dichtmittelstreifen unabhängig von dessen konkreten mechanischen Eigenschaften und von Fertigungstoleranzen bei der Erzeugung der Öffnung für das Druckausgleichselement.

Vorteile und Zweckmäßigkeiten der Erfindung ergeben sich im Übrigen aus der nachfolgenden Beschreibung von Ausführungsbeispielen anhand der Figuren. Von diesen zeigen:
Fig. 1 eine perspektivische, teilweise geschnittene Detailansicht einer bekannten Isolierverglasung,
Fig. 2 eine perspektivische Ansicht eines Druckausgleichselementes zum Einsatz in einer erfindungsgemäßen Isolierverglasung,
Fig. 2a bis 2c schematische Schnittdarstellungen von Ausführungsformen des Druckentlastungselementes in Ausführungen der erfindungsgemäßen Isolierverglasung und
Fig. 3a bis 3d schematische Schnittansichten zur Illustration von Herstellungsschritten einer Ausführungsform der erfindungsgemäßen Isolierverglasung.

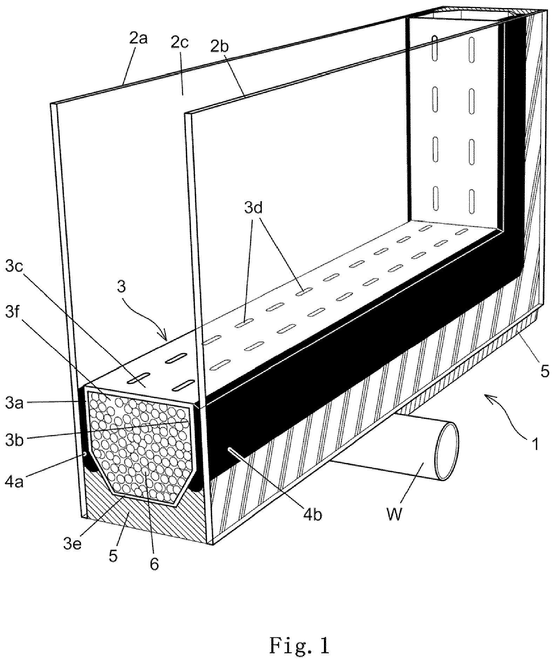

Fig. 1 zeigt in einer teilweise geschnittenen perspektivischen Ansicht eine Isolierverglasung 1 aus einer ersten und zweiten Glasscheibe 2a, 2b, die in Parallelstellung und miteinander ausgerichteten Kanten über einen Abstandshalter 3 auf Abstand voneinander gehalten sind. Die beiden Scheibenkontaktwände 3a, 3b des Abstandshalters 3 sind mit Butylstreifen 4a, 4b versehen, die eine dampfdiffusionsdichte Verbindung zwischen dem Abstandshalter 3 und den Glasscheiben 2a, 2b realisieren. Ein Dichtmittelstreifen 5, der mittels einer Auftragswalze W außerhalb des Abstandhalters 3 in den Spalt zwischen den Scheiben 2a, 2b gedrückt wird, stellt eine stoffschlüssige und wasserdichte Verbindung zwischen den Scheiben her und vervollständigt die Isolierverglasung 1.

Der Abstandshalter 3, der den Querschnitt eines miteinander an den Längsseiten verbundenen Rechtecks und Trapezes hat, ist mit Kügelchen eines Trockenmittels 6 befüllt und hat eine mit kleinen Öffnungen 3d versehene Verglasungsinnenraumwand 3c. Die vom Dichtmittelstreifen 5 bedeckte Wand des Abstandshalters 3 wird nachfolgend als seine Außenwand 3e bezeichnet. Die Befüllung des Innenraumes 3f des Abstandshalters 3 mit dem Trockenmittel 6, in Verbindung mit den Öffnungen 3d, sorgt dafür, dass etwa in den Verglasungsinnenraum 2c eindringende Feuchtigkeit aufgenommen werden und nicht zu einem Beschlagen der Scheiben führen kann.

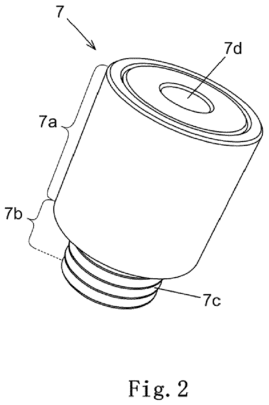

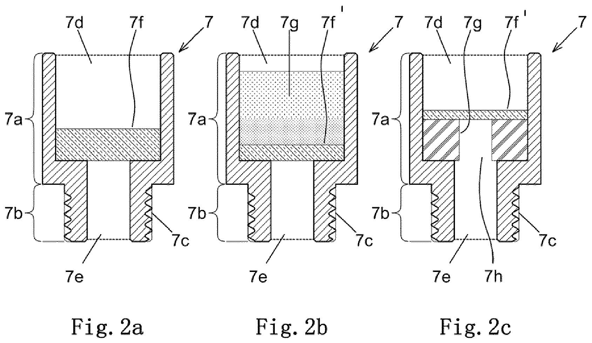

Fig. 2 zeigt eine perspektivische Außenansicht eines Druckausgleichselementes 7, das zum Einsetzen in eine Isolierverglasung 1 nach Fig. 1 bestimmt ist, und die Figuren 2a, 2b und 2c zeigen beispielhafte konstruktive Ausführungen eines solchen Druckausgleichselementes.

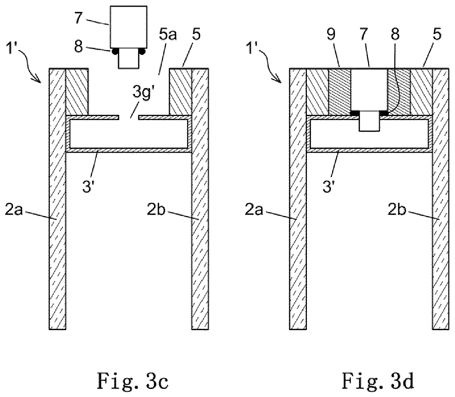

Gemäß Fig. 2a hat das Druckausgleichselement 7 die Grundform eines abgestuften Zylinders mit einem ersten Grundkörperabschnitt 7a mit größerem Durchmesser und einem zweiten Grundkörperabschnitt 7b mit kleinerem Durchmesser, der hier mit einem Außengewinde 7c versehen ist, aber auch eingesteckt oder eingeclipst sein kann. Wie ein solches Druckausgleichselement 7 in der Isolierverglasung 1 platziert wird, ist in Fig. 3d gezeigt und weiter unten beschrieben. Neben einer ersten Öffnung 7d, die in Fig. 2a zu erkennen ist, hat das Druckausgleichselement 7 eine zweite Öffnung 7e, die in Fig. 2a zu erkennen ist.

Die Figuren 2a bis 2c zeigen mögliche konstruktive Realisierungen des Druckausgleichselementes 7 bei weitgehend identischem Gehäuseaufbau. Die Darstellungen sind als Prinzipskizzen zu verstehen und erheben nicht den Anspruch, sämtliche zur Realisierung der jeweiligen Funktion sinnvoll einzusetzenden Teile zu zeigen. Es versteht sich, dass auch der Gehäuseaufbau und die Grundform des Gehäuses von der in den Figuren 2a bis 2c gegebenen Darstellung abweichen können.

Fig. 2a zeigt eine Bestückung des Druckausgleichselementes 7 mit einer im Ausgangszustand ultrapermeablen, aber durch Alterung des Materials sich in einem vorbestimmten Zeitraum zu einer dampfdiffusionsdichten und auch den Gasaustausch behindernden Folie wandelnden Membran 7f, etwa aus Poly(1-trimethylsilyl-1-propyne) (PTMSP) oder einem ähnlichen Material. Die genaue Zusammensetzung, Struktur und Dicke der Membran wird in Abhängigkeit vom konkreten Einsatzzweck, insbesondere abhängig davon gewählt, über welchen anzunehmenden Zeitraum von der Fertigstellung der Isolierverglasung bis zu deren Ankunft am endgültigen Einsatzort ein Druckausgleich zwischen der jeweiligen Umgebung und dem Verglasungsinnenraum möglich sein soll.

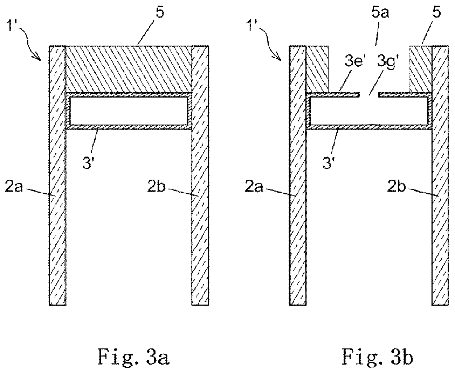

Fig. 2b zeigt als weitere Variante ein Druckausgleichselement 7, in das am Boden des ersten Grundkörperabschnitts 7a eine dampfdiffusionsdichte, aber gasdurchlässige PTFE-Membran 7f' eingelegt ist und über dieser ein anfänglich gut gasdurchlässiges Kunststoffmaterial 7g, etwa ein PEG-Pulver, -Granulat oder -Formkörper, aufgeschüttet oder aufgelegt ist. Bei diesem ist die Gasdurchlässigkeit zeitabhängig unter dem Einfluss der Luftfeuchtigkeit signifikant reduziert. Je nach Einsatzzweck kann dieses Material in seiner chemischen Zusammensetzung und Einbringungsform derart gewählt sein, dass die Reduktion der Gasdurchlässigkeit über einen vorbestimmten Zeitraum (siehe oben) erfolgt und gegebenenfalls zu einem völlig gasdichten Verschluss des Druckausgleichselementes führt. Fig. 2c zeigt als weitere Variante ein Druckausgleichselement 7, in das übereinander eine wasserdichte, den Durchtritt von Wasserdampf bremsende, aber gasdurchlässige PTFE-Membran 7f' und ein Formkörper 7g aus einem in Folge von Alterung oder unter dem Einfluss von Bestandteilen der Umgebungsluft (beispielsweise Luftfeuchte) aufquellenden Material angeordnet sind. In der Abbildung ist der Formkörper 7g mit einer zentralen Durchgangsöffnung 7h gezeigt, die sich aufgrund des Aufquellens zunehmend verschließt. Der Formkörper kann aber auch mehrere kleinere Durchgangsöffnungen oder anfänglich relativ große Poren haben, die sich in ähnlicher Weise zeitabhängig verkleinern und gegebenenfalls letztlich völlig verschließen. Wie bei den vorgenannten Ausführungen, erfolgt die Wahl des konkreten Materials und der konstruktiven Ausführung dieser Komponente des Druckausgleichselementes in Abhängigkeit vom konkreten Einsatzzweck, insbesondere der gewünschten zeitabhängigen Reduzierung der Gasdurchlässigkeit. Fig. 3a bis 3d zeigen in skizzenartigen Querschnittsdarstellungen einer erfindungsgemäßen Isolierverglasung 1' wesentliche Schritte von deren Herstellung. Der Aufbau der Isolierverglasung 1' entspricht weitgehend demjenigen der Isolierverglasung 1 in Fig. 1 und entsprechende oder funktionsähnliche Teile sind mit den gleichen Bezugsziffern wie dort bezeichnet und werden hier nicht nochmals erläutert. In den Figuren 3a bis 3d ist ein im Querschnitt rechteckiger Abstandshalter 3' ohne Trockenmittel-Befüllung dargestellt; es kann jedoch davon ausgegangen werden, dass im Kontext der vorliegenden Erfindung ein Abstandshalter 3 mit der in Fig. 1 gezeigten geometrischen Konfiguration und Trockenmittel-Befüllung bevorzugt eingesetzt wird. Weiterhin ist davon auszugehen, dass der Abstandshalter 3' mit den in Fig. 1 gezeigten Butylstreifen 4a, 4b versehen sein kann.

In Fig. 3a ist die Isolierverglasung 1' nach der Komplettierung des Randverbundes durch Aufbringen des Dichtmittelstreifens 5 und dessen Aushärtung gezeigt. Wie in Fig. 3b zu erkennen, werden dann in den Dichtmittelstreifen 5 und die Außenwand 3e' jeweils eine an die Außenform eines einzusetzenden Druckausgleichselementes angepasste Öffnung 5a bzw. 3g' eingebracht. Hierbei wird die Öffnung 5a im Dichtmittelstreifen 5 größer dimensioniert als die entsprechenden Dimensionen des Druckausgleichselementes, während die Öffnung 3g' im Abstandshalter 3' exakt auf die entsprechenden Abmessungen des Druckausgleichselementes angepasst sind, beispielsweise um ein abschnittsweise mit einem Gewinde versehenes Druckausgleichselement in die Öffnung 3g' einzuschrauben.

Gemäß Fig. 3c wird dann das Druckausgleichselement 7, versehen mit einer Butylschnur 8, an den Ort der Öffnungen 5a, 3g' gebracht und in die Öffnungen (beispielsweise durch Einschrauben in die Öffnung 3g') derart eingesetzt, dass es dort fest sitzt und die Butylschnur 8 derart elastisch verformt ist, dass sie eine Dampfdiffusionsdichtung an der Öffnung 3g' des Abstandshalters 3' bildet. Dieser Zustand ist in Fig. 3d gezeigt, und dort ist auch zu erkennen, dass das eingesetzte Druckausgleichselement 7 mit einem Dichtmassering 9 zur vollständigen elastischen Ausfüllung der Öffnung 5a und zur Wiederherstellung der wasserdichten Abdichtung der Isolierverglasungs-Kante umspritzt wurde. Die Herstellung der gezeigten Ausführungsform der erfindungsgemäßen Isolierverglasung 1' ist damit beendet.

Im Übrigen ist die Ausführung der Erfindung auch in einer Vielzahl von Abwandlungen der hier gezeigten Beispiele und weiter oben hervorgehobenen Aspekte der Erfindung möglich.

### Bezugszeichenliste

- 1, 1': Isolierverglasung
- 2a, 2b: Glasscheibe
- 2c: Verglasungsinnenraum
- 3, 3': Abstandshalter
- 3a, 3b: Scheibenkontaktwand
- 3c: Verglasungsinnenraumwand
- 3d: Öffnungen
- 3e, 3e': Außenwand
- 3f: Innenraum des Abstandshalters
- 3g, 3g': Öffnung des Abstandshalters
- 4a, 4b: Butylstreifen
- 5: Dichtmittelstreifen
- 5a: Öffnung des Dichtmittelstreifens
- 6: Trockenmittel
- 7: Druckausgleichselement
- 7a, 7b: Grundkörperabschnitt
- 7c: Außengewinde
- 7d, 7e 7f, 7f': Öffnung des Druckausgleichselementes Membran
- 7g: Kunststoff-Granulat bzw. -Formkörper
- 7h: Durchgangsöffnung im Formkörper
- 8: Butylschnur
- 9: Dichtmassering
- W: Auftragswalze

## Patentansprüche

1. Isolierverglasung (1'), die
eine erste Scheibe (2a) und eine zweite Scheibe (2b),
einen mit der ersten und zweiten Scheibe jeweils wasserdampfdicht fest verbundenen, umlaufenden Abstandshalter (3, 3') zwischen der ersten Scheibe und der zweiten Scheibe, der mindestens zwei parallel verlaufende Scheibenkontaktwände, eine Außenwand (3e, 3e') und eine Verglasungsinnenraumwand (3c) sowie einen Innenraum (3f) hat, und
einen um die Außenwand des Abstandshalters zwischen der ersten und zweiten Scheibe umlaufenden wasserdichten Dichtmittelstreifen (5) umfasst, wobei in den Dichtmittelstreifen und den Abstandshalter mindestens ein
Druckausgleichselement (7) eingesetzt ist, welches einerseits zur umgebenden Atmosphäre und andererseits zum Innenraum des Abstandshalters oder zum Verglasungsinnenraum (2c) zwischen der ersten und der zweiten Scheibe offen und so ausgebildet ist, dass es eine aufgrund von Alterung und/oder Atmosphären-Einflüssen zeitlich beschränkte Gas-Verbindung mit Druckausgleichsfunktion zwischen der Atmosphäre und dem Innenraum des Abstandshalters oder dem Verglasungsinnenraum bereitstellt,
**dadurch gekennzeichnet, dass** das Druckausgleichselement (7) in einem Grundkörper (7a, 7b) eine anfänglich gasdurchlässige Substanz (7f, 7g) enthält, die altert
und/oder unter dem Einfluss von Luftfeuchtigkeit in der Atmosphäre degeneriert und die Gasdurchlässigkeit des Druckausgleichselementes bis zu dessen völligem Verschluss zunehmend verringert.

2. Isolierverglasung (1') nach Anspruch 1, wobei die degenerierende Substanz (7g) zusammen mit, insbesondere auf der Außenseite, einer wasserdichten und gasdurchlässigen, jedoch den Durchtritt von Wasserdampf bremsenden Membran (7f') in das Druckausgleichselement (7) gefüllt ist.

3. Isolierverglasung (1') nach Anspruch 2, wobei die degenerierende Substanz ein Polyethylenglycolpulver oder -granulat und die wasserdichte Membran eine PTFE-Membran, insbesondere eine gereckte oder gesinterte PTFE-Membran, aufweist.

4. Isolierverglasung (1') nach Anspruch 1, wobei die alternde Substanz als Membran (7f), insbesondere auf PTSMP-Basis, in den Grundkörper (7a, 7b) eingefügt ist.

5. Isolierverglasung (1') nach Anspruch 1, wobei die degenerierende Substanz zusammen mit, insbesondere auf der Innenseite, einer wasserdichten und gasdurchlässigen, jedoch den Durchtritt von Wasserdampf bremsenden Membran (7f') in das Druckausgleichselement (7) eingesetzt ist, wobei insbesondere die wasserdichte Membran eine PTFE-Membran aufweist und die degenerierende Substanz eine unter dem Einfluss von Luftfeuchtigkeit quellende Substanz ist, die als anfänglich poröser oder mit Öffnungen (7h) versehener Einsatz (7g) vorliegt.

6. Isolierverglasung (1') nach einem der vorangehenden Ansprüche, wobei die Verglasungsinnenraumwand (3c) des Abstandshalters (3, 3') gasdurchlässig ausgeführt ist und das Druckausgleichselement (7) in den Innenraum (3f) des Abstandshalters ragt und diesen druckausgleichend mit der Atmosphäre verbindet.

7. Isolierverglasung (1') nach Anspruch 6, wobei die Verglasungsinnenraumwand (3c) des Abstandshalters (3, 3') eine Vielzahl kleiner Öffnungen (3d) aufweist, die insbesondere über die gesamte Länge des Abstandshalters verteilt sind, und der Innenraum (3f) des Abstandshalters insbesondere mit einem Trockenmittel (6) befüllt ist.

8. Isolierverglasung (1') nach einem der Ansprüche 1 bis 6, wobei das Druckausgleichselement (7) den Abstandshalter (3, 3') durchstößt und in den Verglasungsinnenraum (2c) ragt und diesen druckausgleichend mit der Atmosphäre verbindet.

9. Isolierverglasung (1') nach einem der vorangehenden Ansprüche, wobei ein Grundkörperabschnitt (7a) des Druckausgleichselements (7) in den Dichtmittelstreifen (5) eingebettet und an dessen Außenseite offen und an der Außenwand (3e, 3e') des Abstandshalters (3, 3') fixiert ist.

10. Isolierverglasung (1') nach Anspruch 9, wobei der in den Dichtmittelstreifen (5) eingebettete Grundkörperabschnitt (7a) im Dichtmittelstreifen von einer separaten wasserdichten Dichtung (9) umgeben und an der Durchstoßöffnung in der Außenwand (3e, 3e') des Abstandshalters (3, 3') mit einer weiteren separaten, wasserdampfdichten Dichtung (8) versehen ist.

11. Isolierverglasung (1') nach einem der vorangehenden Ansprüche, wobei der Grundkörper (7a, 7b) des Druckausgleichselementes (7) im Wesentlichen abgestufte zylindrische Form hat.

12. Isolierverglasung (1') nach Anspruch 10 und 11, wobei die separate wasserdichte Dichtung (9) hohlzylinder- bzw. ringförmig und die weitere separate, wasserdampfdichte Dichtung (8) ringförmig ist.

13. Verfahren zur Herstellung einer Isolierverglasung (1') nach einem der vorangehenden Ansprüche, mit den Schritten:
- Bilden der Isolierverglasung durch paralleles Anordnen der ersten und zweiten Scheibe (2a, 2b) und deren wasserdampfdichtes Verbinden mit der ersten bzw. zweiten Scheibenkontaktwand (3a, 3b) des Abstandshalters (3, 3'),
- Aufbringen des Dichtmittelstreifens (5) umlaufend auf die Außenwand (3e, 3e') des Abstandshalters,
- Ausbilden einer Öffnung (5a, 3g') an mindestens einer Stelle des Dichtmittelstreifens und mindestens in der Außenwand (3e') des Abstandshalters,
- gasdichtes Einsetzen des oder jedes Druckausgleichselementes (7), das in einem Grundkörper (7a, 7b) eine anfänglich gasdurchlässige Substanz enthält, die altert und/oder unter dem Einfluss von Luftfeuchtigkeit in der Atmosphäre degeneriert und die Gasdurchlässigkeit des Druckausgleichselementes bis zu dessen völligem Verschluss zunehmend verringert, in die oder jede Öffnung im Dichtmittelstreifen und die Außenwand des Abstandshalters.

14. Verfahren nach Anspruch 13, wobei das Druckausgleichselement (7) vor dem Einsetzen in die Öffnung (5a) des Dichtmittelstreifens (5) mit der separaten wasserdampfdichten Dichtung (8) versehen wird.

15. Verfahren nach Anspruch 13 oder 14, wobei die Öffnung (5a) im Dichtmittelstreifen (5) größer dimensioniert wird als die Außenabmessungen des Druckausgleichselementes (7), und nach dem Einsetzen des Druckausgleichselementes der Spalt zwischen dessen Außenkontur und der Innenwandung der Öffnung durch Einspritzen einer Dichtmasse zur Bildung der separaten wasserdichten Dichtung (9) ausgefüllt wird.

## Claims

1. Insulating glazing (1') that comprises
a first pane (2a) and a second pane (2b),
a circumferential spacer (3, 3') between the first pane and the second pane that is fixedly connected to the first and second pane in a water-vapor-tight manner in each case, which spacer has at least two parallel pane contact walls, an outer wall (3e, 3e'), and a glazing interior wall (3c) as well as an interior (3f), and a water-tight sealant strip (5) running around the outer wall of the spacer between the first and second pane, wherein at least one pressure-equalizing element (7) is inserted into the sealant strip and the spacer, which pressure-equalizing element is open, on the one hand, to the surrounding atmosphere and, on the other, to the interior of the spacer or to the glazing interior (2c) between the first and the second pane and is implemented such that it provides a gas connection having a pressure-equalizing function between the atmosphere and the interior of the spacer or the glazing interior which gas connection is temporally limited due to aging and/or atmospheric influences,
**characterized in that** the pressure-equalizing element (7) contains, in a main body (7a, 7b), an initially gas-permeable substance (7f, 7g), which ages and/or degenerates under the influence of humidity in the atmosphere and progressively reduces the gas permeability of the pressure-equalizing element until its complete closure.

2. Insulating glazing (1') according to claim 1, wherein the degenerating substance (7g) together with, in particular on the outer side, a water-tight and gas-permeable membrane (7f'), which, however, retards the passage of water vapor, is filled into the pressure-equalizing element (7).

3. Insulating glazing (1') according to claim 2, wherein the degenerating substance is a polyethylene glycol powder or granulate and the water-tight membrane is a PTFE membrane, in particular a stretched or sintered PTFE membrane.

4. Insulating glazing (1') according to claim 1, wherein the aging substance is inserted into the main body (7a, 7b) as a membrane (7f), in particular based on PTSMP.

5. Insulating glazing (1') according to claim 1, wherein the degenerating substance together with, in particular on the inner side, a water-tight and gas-permeable membrane (7f'), which, however, retards the passage of water vapor, is inserted into the pressure-equalizing element (7), wherein in particular the water-tight membrane is a PTFE membrane, and the degenerating substance is a substance that swells under the influence of humidity, which is present as an insert (7g) that is initially porous or is provided with openings (7h).

6. Insulating glazing (1') according to one of the preceding claims, wherein the glazing interior wall (3c) of the spacer (3, 3') is gas permeable and the pressure-equalizing element (7) protrudes into the interior (3f) of the spacer and connects the interior to the atmosphere in a pressure-equalizing manner.

7. Insulating glazing (1') according to claim 6, wherein the glazing interior wall (3c) of the spacer (3, 3') has a plurality of small openings (3d) that are, in particular, distributed over the entire length of the spacer, and the interior (3f) of the spacer is, in particular, filled with a desiccant (6).

8. Insulating glazing (1') according to one of claims 1 through 6, wherein the pressure-equalizing element (7) pierces the spacer (3, 3') and protrudes into the glazing interior (2c) and connects the interior to the atmosphere in a pressure-equalizing manner.

9. Insulating glazing (1') according to one of the preceding claims, wherein a main body section (7a) of the pressure-equalizing element (7) is embedded in the sealant strip (5) and is open on its outer side and is fixed to the outer wall (3e, 3e') of the spacer (3, 3').

10. Insulating glazing (1') according to claim 9, wherein the main body section (7a) embedded in the sealant strip (5) is surrounded by a separate watertight seal (9) and is provided at the pierced opening in the outer wall (3e, 3e') of the spacer (3, 3') with another separate water-vapor-tight seal (8).

11. Insulating glazing (1') according to one of the preceding claims, wherein the main body (7a, 7b) of the pressure-equalizing element (7) essentially has a stepped cylindrical shape.

12. Insulating glazing (1') according to claim 10 and 11, wherein the separate water-tight seal (9) has a hollow cylindrical or annular shape and the other separate water-vapor-tight seal (8) is annular.

13. Method for producing an insulating glazing (1') according to one of the preceding claims, having the steps:
- forming the insulating glazing by parallel arrangement of the first and second pane (2a, 2b) and connecting them in a water-vapor-tight manner to the first and second pane contact wall (3a, 3b) of the spacer (3, 3'), respectively,
- applying the sealant strip (5) circumferentially on the outer wall (3e, 3e') of the spacer,
- forming an opening (5a, 3g') at at least one point of the sealant strip and at least in the outer wall (3e') of the spacer,
- gas-tightly inserting the/each pressure-equalizing element (7), which contains, in a main body (7a, 7b), an initially gas-permeable substance that ages and/or degenerates under the influence of humidity in the atmosphere and progressively reduces the gas permeability of the pressure-equalizing element until its complete closure, into the/each opening in the sealant strip and the outer wall of the spacer.

14. Method according to claim 13, wherein the pressure-equalizing element (7) is provided with the separate water-vapor-tight seal (8) before insertion into the opening (5a) of the sealant strip (5).

15. Method according to claim 13 or 14, wherein the opening (5a) in the sealant strip (5) is dimensioned larger than the outer dimensions of the pressure-equalizing element (7), and after insertion of the pressure-equalizing element, the gap between its outer contour and the inner wall of the opening is filled by injecting a sealing compound to form the separate water-tight seal (9).

## Revendications

1. Vitrage isolant (1') qui comprend
une première vitre (2a) et une deuxième vitre (2b),
une entretoise périphérique (3, 3') entre la première vitre et la deuxième vitre, qui est reliée de manière fixe et étanche à la vapeur d'eau à la première et à la deuxième vitre, et qui présente au moins deux parois parallèles de contact avec la vitre, une paroi extérieure (3e, 3e') et une paroi intérieure de vitrage (3c) ainsi qu'un intérieur (3f), et
une bande d'étanchéité étanche à l'eau (5) s'étendant autour de la paroi extérieure de l'espaceur entre la première et la deuxième vitre, dans laquelle au moins un élément d'égalisation de pression (7) est inséré dans la bande d'étanchéité et l'espaceur, lequel élément d'égalisation de pression est ouvert, d'une part, à l'atmosphère environnante et, d'autre part, à l'intérieur de l'espaceur ou à l'intérieur du vitrage (2c) entre la première et la deuxième vitre et est mis en oeuvre de telle sorte qu'il fournit une connexion de gaz ayant une fonction d'égalisation de pression entre l'atmosphère et l'intérieur de l'espaceur ou l'intérieur du vitrage, laquelle connexion de gaz est limitée dans le temps en raison du vieillissement et/ou des influences atmosphériques,
**caractérisé en ce que** l'élément d'égalisation de pression (7) contient, dans un corps principal (7a, 7b), une substance initialement perméable au gaz (7f, 7g), qui vieillit et/ou dégénère sous l'influence de l'humidité dans l'atmosphère et réduit progressivement la perméabilité au gaz de l'élément d'égalisation de pression jusqu'à sa fermeture complète.

2. Vitrage isolant (1') selon la revendication 1, dans lequel la substance dégénérante (7g) ainsi que, en particulier sur le côté extérieur, une membrane (7f') étanche à l'eau et perméable aux gaz, qui retarde toutefois le passage de la vapeur d'eau, sont remplies dans l'élément d'égalisation de pression (7).

3. Vitrage isolant (1') selon la revendication 2, dans lequel la substance dégénérante est une poudre ou un granulat de polyéthylène glycol et la membrane étanche à l'eau est une membrane en PTFE, en particulier une membrane en PTFE étirée ou frittée.

4. Vitrage isolant (1') selon la revendication 1, dans lequel la substance de vieillissement est insérée dans le corps principal (7a, 7b) sous forme de membrane (7f), notamment à base de PTSMP.

5. Vitrage isolant (1') selon la revendication 1, dans lequel la substance de dégénérescence est insérée dans l'élément d'égalisation de pression (7) avec, en particulier sur le côté intérieur, une membrane (7f') étanche à l'eau et perméable aux gaz, qui retarde toutefois le passage de la vapeur d'eau, dans lequel en particulier la membrane étanche à l'eau est une membrane en PTFE, et la substance dégénérante est une substance qui gonfle sous l'influence de l'humidité, qui est présente sous la forme d'un insert (7g) initialement poreux ou qui est pourvu d'ouvertures (7h).

6. Vitrage isolant (1') selon l'une des revendications précédentes, dans lequel la paroi intérieure du vitrage (3c) de l'intercalaire (3, 3') est perméable aux gaz et l'élément d'égalisation de pression (7) fait saillie dans l'intérieur (3f) de l'intercalaire et relie l'intérieur à l'atmosphère de manière à égaliser la pression.

7. Vitrage isolant (1') selon la revendication 6, dans lequel la paroi intérieure (3c) du vitrage de l'intercalaire (3, 3') présente une pluralité de petites ouvertures (3d) qui sont notamment réparties sur toute la longueur de l'intercalaire, et l'intérieur (3f) de l'intercalaire est notamment rempli d'un déshydratant (6).

8. Vitrage isolant (1') selon l'une des revendications 1 à 6, dans lequel l'élément d'égalisation de pression (7) perce l'espaceur (3, 3') et fait saillie dans l'intérieur du vitrage (2c) et relie l'intérieur à l'atmosphère de manière à égaliser la pression.

9. Vitrage isolant (1') selon l'une des revendications précédentes, dans lequel une section de corps principal (7a) de l'élément d'égalisation de pression (7) est encastrée dans la bande d'étanchéité (5) et est ouverte sur son côté extérieur et est fixée à la paroi extérieure (3e, 3e') de l'espaceur (3, 3').

10. Vitrage isolant (1') selon la revendication 9, dans lequel la section du corps principal (7a) noyée dans la bande d'étanchéité (5) est entourée d'un joint étanche à l'eau séparé (9) et est pourvue au niveau de l'ouverture percée dans la paroi extérieure (3e, 3e') de l'espaceur (3, 3') d'un autre joint étanche à la vapeur d'eau séparé (8).

11. Vitrage isolant (1') selon l'une des revendications précédentes, dans lequel le corps principal (7a, 7b) de l'élément d'égalisation de pression (7) présente essentiellement une forme cylindrique étagée.

12. Vitrage isolant (1') selon les revendications 10 et 11, dans lequel le joint séparé étanche à l'eau (9) a une forme cylindrique creuse ou annulaire et l'autre joint séparé étanche à la vapeur d'eau (8) est annulaire.

13. Procédé de fabrication d'un vitrage isolant (1') selon l'une des revendications précédentes, comportant les étapes :
- former le vitrage isolant en disposant parallèlement la première et la deuxième vitre (2a, 2b) et en les reliant de manière étanche à la vapeur d'eau respectivement à la paroi de contact de la première et de la deuxième vitre (3a, 3b) de l'intercalaire (3, 3'),
- appliquer la bande d'étanchéité (5) de manière circonférentielle sur la paroi extérieure (3e, 3e') de l'espaceur,
- former une ouverture (5a, 3g') en au moins un point de la bande d'étanchéité et au moins dans la paroi extérieure (3e') de l'écarteur,
- insérer de manière étanche aux gaz le/chaque élément d'égalisation de pression (7), qui contient, dans un corps principal (7a, 7b), une substance initialement perméable aux gaz qui vieillit et/ou dégénère sous l'influence de l'humidité de l'atmosphère et réduit progressivement la perméabilité aux gaz de l'élément d'égalisation de pression jusqu'à sa fermeture complète, dans la/chaque ouverture dans la bande d'étanchéité et la paroi extérieure de l'espaceur.

14. Procédé selon la revendication 13, dans lequel l'élément d'égalisation de pression (7) est muni du joint étanche à la vapeur d'eau séparé (8) avant son insertion dans l'ouverture (5a) de la bande d'étanchéité (5).

15. Procédé selon la revendication 13 ou 14, dans lequel l'ouverture (5a) de la bande d'étanchéité (5) est dimensionnée plus grande que les dimensions extérieures de l'élément d'égalisation de pression (7), et après l'insertion de l'élément d'égalisation de pression, l'espace entre son contour extérieur et la paroi intérieure de l'ouverture est rempli par l'injection d'un composé d'étanchéité pour former le joint étanche à l'eau séparé (9).
